# EUROPEAN PATENT APPLICATION

(11) **EP 4 661 245 A1**
(43) Date of publication of application: **10.12.2025**
(21) Application number: 24749581.5
(22) Date of filing: 24.01.2024
(51) Int. Cl.: H02J 15/00

(54) **ENERGY STORAGE SYSTEM EMERGENCY STOP CONTROL SYSTEM AND ENERGY STORAGE STATION**

(30) Priority: 31.01.2023 CN 202320226489 U
(71) Applicant: BYD Company Limited, Shenzhen, Guangdong 518118 (CN)
(72) Inventor: LIU, Lukuan, Shenzhen, Guangdong 518118 (CN); YIN, Xueqin, Shenzhen, Guangdong 518118 (CN); CAO, Hu, Shenzhen, Guangdong 518118 (CN); LI, Shanpeng, Shenzhen, Guangdong 518118 (CN); YIN, Xiaoqiang, Shenzhen, Guangdong 518118 (CN)
(74) Representative: Mathys & Squire
(86) International application number: PCT/CN2024/073779
(87) International publication number: WO 2024/160100

(57) **Abstract**

Provided is an energy storage station, including an energy storage system emergency shutdown control system. The energy storage system emergency shutdown control system includes N energy storage system control modules, where each energy storage system control module includes an energy storage system emergency shutdown trigger unit, an intermediate relay, and an energy storage system control unit. N is a positive integer greater than 1. A first end of an energy storage system emergency shutdown trigger unit of an n^{th} energy storage system control module is connected to a second end of an energy storage system emergency shutdown trigger unit of an (n+1)^{th} energy storage system control module, and n<N.

## Description

### CROSS-REFERENCE TO RELATED APPLICATIONS

This application claims priority to Chinese Patent Application No. 202320226489.9, filed to the China National Intellectual Property Administration on January 31, 2023 and entitled "Energy Storage System Emergency Shutdown Control System and Energy Storage Station," which is incorporated herein by reference in its entirety.

### TECHNICAL FIELD

This application relates to the field of electrical technology, and in particular, to an energy storage system emergency shutdown control system and an energy storage station.

### BACKGROUND

In a conventional power system, if a fault occurs, the protection measure for the emergency shutdown of an energy storage system is mainly achieved by manually pressing the emergency stop button, that is, manually powering off a single system to achieve emergency shutdown control of a single energy storage system. Such a design and operation manner may achieve the emergency shutdown of a single system. However, in scenarios where a plurality of energy storage systems are gradually being combined to form a station and the station needs to output power externally, the protection measure for the emergency shutdown of the energy storage system lacks flexibility.

### SUMMARY

This application is intended to solve one of the technical problems in the prior art at least to some extent. Therefore, an objective of this application is to propose an energy storage system emergency shutdown control system to ensure that when an individual energy storage unit needs to be maintained or shut down in an emergency and a station needs to output power externally at the same time, relatively flexible shutdown control is achieved for the emergency shutdown of an energy storage system.

This application further proposes an energy storage system.

This application further proposes an energy storage station.

In order to achieve the foregoing objective, an embodiment of a first aspect of this application proposes an energy storage system emergency shutdown control system, including: N energy storage system control modules, wherein each energy storage system control module includes an energy storage system emergency shutdown trigger unit, an intermediate relay, and an energy storage system control unit, the intermediate relay includes a relay coil and a relay switch, a first end of the relay coil being connected to a first end of the energy storage system emergency shutdown trigger unit, a second end of the relay coil being connected to a second end of a system distribution power supply, the relay switch being connected to the energy storage system control unit, the intermediate relay being configured to generate an energy storage system emergency shutdown control signal in response to a trigger signal of the energy storage system emergency shutdown trigger unit and to send the energy storage system emergency shutdown control signal to the connected energy storage system control unit, and the energy storage system control unit being configured to control an energy storage unit to stop output in response to the energy storage system emergency shutdown control signal, where N is a positive integer greater than 1; wherein a first end of an energy storage system emergency shutdown trigger unit of an n^{th} energy storage system control module is connected to a second end of an energy storage system emergency shutdown trigger unit of an (n+1)^{th} energy storage system control module, and n<N.

In the energy storage system emergency shutdown control system according to an embodiment of this application, N energy storage system control modules are disposed, and relay coils in intermediate relays in all energy storage system control modules are connected in series. When the energy storage system needs to be maintained or shut down completely due to a fault, an energy storage system emergency shutdown trigger unit in a 1^{st} energy storage system control module is triggered to control all energy storage units to be shut down. Alternatively, when an energy storage unit fails or needs to be shut down for maintenance and a station needs to output power, a part of the energy storage units may be shut down by triggering an energy storage system emergency stop button in an energy storage system control module that fails or needs to be maintained, or an energy storage system emergency shutdown trigger unit of any energy storage system control module after the 1^{st} energy storage system control module, while remaining energy storage units continue to work, thereby ensuring that when an individual energy storage unit needs to be maintained or shut down in an emergency and a station needs to output power externally at the same time, relatively flexible shutdown control is achieved for the emergency shutdown of an energy storage system.

In some embodiments of this application, the energy storage system control unit includes: a system control board, wherein the system control board is configured to send a stop power output signal in response to the energy storage system emergency shutdown control signal; and a BMS control cabinet, wherein the BMS control cabinet is connected to the system control board and the energy storage unit, and is configured to control the energy storage unit to stop output in response to the stop power output signal.

In some embodiments of this application, the relay switch includes: a first switch, wherein the first switch is connected to the system control board, and is configured to send the energy storage system emergency shutdown control signal in response to the trigger signal of the energy storage system emergency shutdown trigger unit.

In some embodiments of this application, the relay switch further includes: the energy storage system control unit which includes: a BMS control cabinet and a second switch, wherein the second switch is connected to the BMS control cabinet, and is configured to send the energy storage system emergency shutdown control signal in response to the trigger signal of the energy storage system emergency shutdown trigger unit; and the BMS control cabinet which is configured to control the energy storage unit to stop output in response to the energy storage system emergency shutdown control signal.

In some embodiments of this application, each energy storage system control unit includes a plurality of BMS control cabinets, and the plurality of BMS control cabinets are connected in parallel.

In some embodiments of this application, the energy storage system emergency shutdown control system further includes: a USP power supply, wherein a first end of the USP power supply is connected to a first end of the system distribution power supply, and a second end of the USP power supply is connected to the second end of the system distribution power supply and a second end of each relay coil.

In some embodiments of this application, the energy storage system emergency shutdown control system further includes: a station system emergency shutdown trigger module, wherein a first end of the station system emergency shutdown trigger module is connected to the first end of the USP power supply and the first end of the system distribution power supply, a second end of the station system emergency shutdown trigger module is connected to a second end of an energy storage system emergency shutdown trigger unit of a 1^{st} energy storage system control module, and the station system emergency shutdown trigger module is configured to cut off power supply in response to a station system emergency shutdown trigger signal.

In some embodiments of this application, the energy storage system emergency shutdown control system further includes a station system distribution control cabinet, and the USP power supply and the station system emergency shutdown trigger module are both disposed on the station system distribution control cabinet.

In some embodiments of this application, each energy storage system control module includes a distribution box, and the energy storage system emergency shutdown trigger unit, the intermediate relay and the energy storage system control unit are all disposed on the distribution box.

In order to achieve the foregoing objective, an embodiment of a second aspect of this application proposes an energy storage system, including a plurality of energy storage units and an energy storage system emergency shutdown control system according to any embodiment of the first aspect of this application, where the energy storage system emergency shutdown control system is connected to the plurality of energy storage units.

In order to achieve the foregoing objective, an embodiment of a third aspect of this application proposes an energy storage station, including: a plurality of energy storage systems according to any embodiment of the second aspect of this application.

In the energy storage station according to an embodiment of this application, the energy storage system emergency shutdown control system according to the above embodiment is used to perform emergency shutdown control on the energy storage system, so that when an energy storage unit fails or needs to be shut down for maintenance and a station needs to output power, the energy storage system emergency shutdown control system controls a part of the energy storage units in the energy storage system to be shut down, while remaining energy storage units continue to work, thereby ensuring that when an individual energy storage unit needs to be maintained or shut down in an emergency and a station needs to output power externally at the same time, relatively flexible shutdown control is achieved for the emergency shutdown of an energy storage system.

Additional aspects and advantages of this application will be partially set forth in the following description, and will partially become apparent from the following description, or may be learned from practice of this application.

### BRIEF DESCRIPTION OF THE DRAWINGS

The above and/or additional aspects and advantages of this application become apparent and easily understandable from the description of embodiments in conjunction with the following drawings, in which:
FIG. 1 is a schematic diagram of an energy storage system emergency shutdown control system according to an embodiment of this application;
FIG. 2 is a schematic diagram of an intermediate relay according to an embodiment of this application;
FIG. 3 is a schematic block diagram of an energy storage system according to an embodiment of this application; and
FIG. 4 is a schematic block diagram of an energy storage station according to an embodiment of this application.

### Reference numerals:

energy storage station 100,
energy storage system 20, energy storage unit 201, energy storage system emergency shutdown control system 10,
station system emergency shutdown trigger module 1, energy storage system control module 2, USP power supply 3, station system distribution control cabinet 4,
energy storage system emergency shutdown trigger unit 21, intermediate relay 22, energy storage system control unit 23, distribution box 24,
BMS control cabinet 231, system control board 232,
station system emergency stop button K, energy storage system emergency stop button M, relay coil A, relay switch B, first switch K1, second switch K2.

### DESCRIPTION OF EMBODIMENTS

Embodiments of this application are described in detail below, and the embodiments described with reference to the accompanying drawings are exemplary.

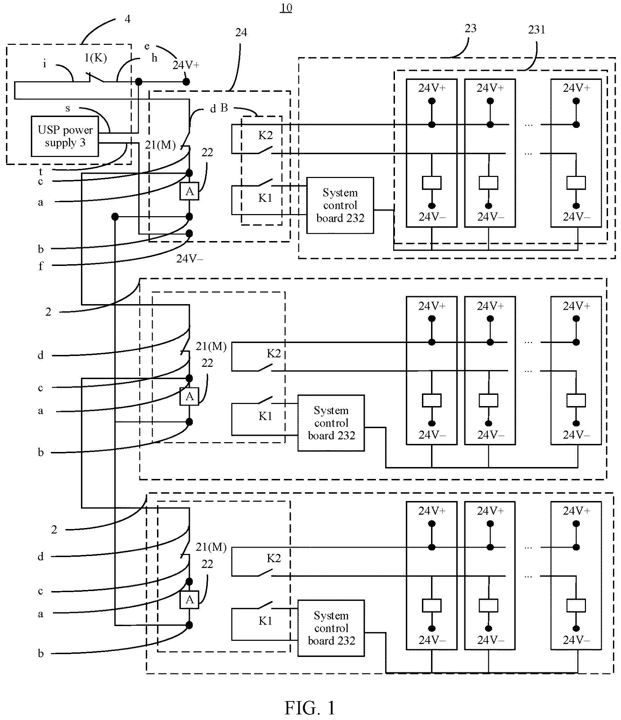

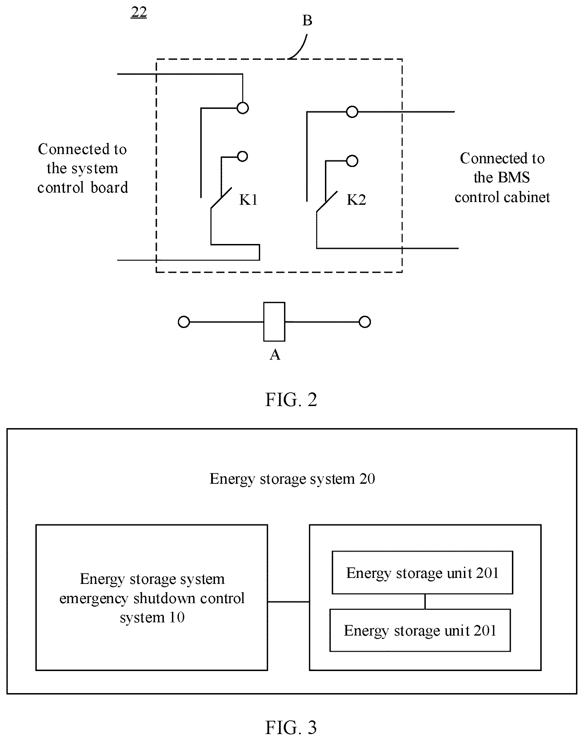

An energy storage system emergency shutdown control system according to an embodiment of this application is described below with reference to FIG. 1 and FIG. 2.

In some embodiments of this application, FIG. 1 is a schematic diagram of an energy storage system emergency shutdown control system according to an embodiment of this application, where the energy storage system emergency shutdown control system 10 includes N energy storage system control modules 2, and N is a positive integer greater than 1.

During actual application, with reference to FIG. 3, with continuous development of an energy storage station, there is a situation in which a plurality of energy storage units 201 are combined to form an energy storage system. An energy storage system control module 2 may be a module including a plurality of hardware circuits and a plurality of hardware control boards. After the plurality of hardware circuits and the plurality of hardware control boards are combined, a signal can be processed and controlled. In the following, embodiments of this application are described by using an example in which N energy storage units 201 are disposed in an energy storage station.

A cascading sequence of the N energy storage units 201 may be determined, and cascading control may be performed on the N energy storage units 201. Specifically, during actual station installation, an IP address may be assigned to each energy storage unit 201 based on an actual position. For example, according to a distance between each energy storage unit 201 and a station system control room, the N energy storage units 201 may be respectively defined as a 1^{st} energy storage unit 201, a 2^{nd} energy storage unit 201, ... and an N^{th} energy storage unit 201 in an order from the near to the distant. Each of the energy storage units is provided with an energy storage system control module 2. Corresponding to the respective energy storage units, the energy storage system control modules 2 are respectively denoted as a 1^{st} energy storage system control module 2, a 2^{nd} energy storage system control module 2, ... and an N^{th} energy storage system control module 2.

Each of the energy storage system control modules 2 includes an energy storage system emergency shutdown trigger unit 21, an intermediate relay 22, and an energy storage system control unit 23.

Referring to FIG. 2, the intermediate relay 22 in this embodiment of this application is explained below. FIG. 2 is a schematic diagram of an intermediate relay according to an embodiment of this application. The intermediate relay 22 includes a relay coil A and a relay switch B. A first end 'a' of the relay coil 'A' is connected to a first end 'c' of the energy storage system emergency shutdown trigger unit 21, and a second end 'b' of the relay coil 'A' is connected to a second end 'f' of a system distribution power supply. As shown in FIG. 1, a first end a of each intermediate relay 22 is connected to the first end c of the energy storage system emergency shutdown trigger unit 21, a second end b of each intermediate relay 22 is connected to a negative end f of the system distribution power supply, and second ends b of all intermediate relays 22 are connected in parallel.

The relay switch B is connected to the energy storage system control unit 23. The intermediate relay 22 is configured to generate an energy storage system emergency shutdown control signal in response to a trigger signal of the energy storage system emergency shutdown trigger unit 21 and to send the energy storage system emergency shutdown control signal to the connected energy storage system control unit 23. Specifically, the energy storage system emergency shutdown trigger unit 21 may include one or more hardware switches, and a user may send a trigger signal by operating a switch.

It will be understood that, with reference to FIG. 3 and with reference to FIG. 1 and FIG. 2, when the energy storage unit 201 works normally, a power supply line of the relay coil A in the intermediate relay 22 remains ON, and the relay switch B in the intermediate relay 22 remains OFF. The status of the relay switch B shown in FIG. 2 is OFF. When the energy storage system emergency shutdown trigger unit 21 is triggered, a power supply line of the relay coil A in the intermediate relay 22 is turned off, and the status of the relay switch B in the intermediate relay 22 changes from OFF to ON. That is, the intermediate relay 22 sends an energy storage system emergency shutdown control signal to the energy storage system control unit 23, and then the energy storage system control unit 23 controls the respective energy storage unit 201 to stop output in response to the energy storage system emergency shutdown control signal.

In some embodiments, as shown in FIG. 1, a first end c of an energy storage system emergency shutdown trigger unit 21 of an n^{th} energy storage system control module 2 is connected to a second end d of an energy storage system emergency shutdown trigger unit 21 of an (n+1)^{th} energy storage system control module 2. That is, a plurality of energy storage system control modules 2 are connected in series.

It can be seen from FIG. 1 and FIG. 2 and the above content that the first end a of the relay coil A in the intermediate relay 22 is connected to the first end c of the energy storage system emergency shutdown trigger unit 21, and the second end b of the relay coil A is connected to the second end f of the system distribution power supply, where the system distribution power supply may select power supply of 24V, and n<N. That is, first ends of the plurality of energy storage system control modules 2 are connected in series. Therefore, when a system distribution power supply supplies power to a circuit where the plurality of energy storage system control modules 2 connected in series are located, current flowing through each energy storage system control module 2 separately flows back to a negative end of the system distribution power supply through the first end of the energy storage system control module 2.

As shown in FIG. 1 and with reference to FIG. 3, each energy storage system emergency shutdown trigger unit 21 is equivalent to a power-on control module in each energy storage system control module 2 in a station system. The energy storage system emergency shutdown trigger unit 21 may be disposed as an energy storage system emergency stop button M in a normally closed state. The energy storage system emergency stop button M is controlled to be on or off, to achieve cascading control of the plurality of energy storage units 201.

Control of an energy storage system emergency stop button M in a q^{th} energy storage system control module 2 is used as an example, and 1<q<N. When the energy storage system emergency stop button M in the q^{th} energy storage system is controlled to be turned off, an energy storage unit 201 where the q^{th} energy storage system control module 2 is located and other energy storage units 201 after the q^{th} energy storage system control module 2 are all shut down, while a circuit in front of the q^{th} energy storage system control module 2 can still form a closed circuit. That is, an energy storage unit 201 in front of the q^{th} energy storage system control module 2 is not shut down.

The 1^{st} energy storage system control module 2 serves as a power supply control module located at a starting position in the energy storage unit 201. The 1^{st} energy storage system control module 2 is controlled to be on or off, to achieve a power supply state of all energy storage units 201 in the energy storage system.

Specifically, when all energy storage units 201 in the entire station need to be maintained or shut down due to a fault, a 1^{st} energy storage system emergency stop button M may be pressed manually. That is, a 1^{st} energy storage system emergency shutdown trigger unit 21 sends a trigger signal. After the 1^{st} energy storage system emergency stop button M is turned off, all of the N energy storage units 201 stop working. Therefore, when an energy storage unit 201 fails or needs to be shut down for maintenance and an energy storage station needs to output power, an energy storage system emergency stop button M in an energy storage system control module 2 that fails or needs to be maintained, or an energy storage system emergency stop button M of any energy storage system control module 2 after the 1^{st} energy storage system control module 2 may be optionally pressed, which may ensure that at least the 1^{st} energy storage unit 201 is in a status in which power is output externally, and a failed energy storage unit 201 or an energy storage unit 201 in which the energy storage system emergency stop button M is pressed and subsequent energy storage units 201 are all in a shutdown state.

In the energy storage system emergency shutdown control system 10 according to an embodiment of this application, the relay coils A in the intermediate relays 22 of the N energy storage system control modules 2 are disposed to be connected in series. When the energy storage system needs to be maintained or shut down completely due to a fault, the 1^{st} energy storage system emergency stop button M in the 1^{st} energy storage system control module 2 is triggered to control shutdown of all energy storage units 201. Alternatively, when an energy storage unit 201 fails or needs to be shut down for maintenance and a station needs to output power, a part of the energy storage units 201 may be shut down by triggering an energy storage system emergency stop button M in an energy storage system control module 2 that fails or needs to be maintained in the energy storage system, or an energy storage system emergency shutdown trigger unit 21 of any energy storage system control module 2 after the 1^{st} energy storage system control module 2, while remaining energy storage units 201 continue to work, thereby ensuring that when an individual energy storage unit 201 needs to be maintained or shut down in an emergency and a station needs to output power externally at the same time, relatively flexible shutdown control is achieved for the emergency shutdown of an energy storage system.

In some embodiments, as shown in FIG. 1 and with reference to FIG. 3, the energy storage system emergency shutdown control system 10 further includes a station system emergency shutdown trigger module 1. The station system emergency shutdown trigger module 1 is disposed in a station system. A first end 'h' of the station system emergency shutdown trigger module 1 is connected to a first end 'e' of the system distribution power supply. Specifically, the station system emergency shutdown trigger module 1 may be disposed as a station system emergency stop button 'K' in a normally open state, and the station system emergency stop button K is disposed to be connected in series with power supply of 24V. When all energy storage units 201 in the entire station need to be maintained or shut down due to a fault, the station system emergency stop button K in the station system emergency shutdown trigger module 1 may be manually pressed to send a station system emergency shutdown trigger signal. The station system emergency shutdown trigger module 1 is configured to cut off power supply in response to the station system emergency shutdown trigger signal.

A second end 'i' of the station system emergency shutdown trigger module 1 is connected to the second end d of the energy storage system emergency shutdown trigger unit 21 of the 1^{st} energy storage system control module 2. The energy storage system emergency shutdown trigger unit 21 of the 1^{st} energy storage system control module 2 is connected in series with the station system emergency stop button K in the station system emergency shutdown trigger module 1, and a plurality of energy storage system control modules 2 are connected in series. Therefore, the energy storage system emergency shutdown trigger units 21 of the plurality of energy storage system control modules 2 are connected in series with the station system emergency stop button K in the station system emergency shutdown trigger module 1.

It will be understood that the station system emergency shutdown trigger module 1 is equivalent to an overall control module in the energy storage station. When the station system emergency stop button K is turned on, all energy storage units 201 in the station system and the energy storage system are shut down.

Based on the above, the station system emergency stop button K in the station system emergency shutdown trigger module 1 is connected in series with the relay coils A in the intermediate relays 22 of the N energy storage system control modules 2, and is connected in series with a positive end of the system distribution power supply. When all energy storage units 201 in the energy storage system in the entire station need to be maintained or shut down due to a fault, the station system emergency stop button K may be pressed to control all of the N energy storage units 201 to stop working. Alternatively, when a certain energy storage system control module 2 cannot be turned off due to thermal runaway, an energy storage system control module 2 in front of the energy storage system control module 2 may be controlled, so as to control shutdown of a part of the energy storage units 201, or the station system emergency stop button K may be pressed to be turned on, so as to control shutdown all energy storage units 201. The station system emergency shutdown trigger module 1 is connected in series with all energy storage system emergency stop buttons M in the energy storage system.

In addition, in some embodiments, as shown in FIG. 1, each energy storage system control module 2 includes a distribution box 24. The energy storage system emergency shutdown trigger unit 21, the intermediate relay 22, and the energy storage system control unit 23 are all disposed on the distribution box 24.

In the energy storage system emergency shutdown control system 10 according to an embodiment of this application, the station system emergency shutdown trigger module 1 and the relay coils A in the intermediate relays 22 of the N energy storage system control modules 2 are disposed to be connected in series, and are connected in series with the positive end of the system distribution power supply. When the energy storage system needs to be maintained or shut down completely due to a fault, the station system emergency shutdown trigger module 1 in the station system is triggered to control shutdown of all energy storage units 201. Alternatively, when an energy storage unit 201 fails or needs to be shut down for maintenance and a station needs to output power, a part of the energy storage units 201 may be shut down by triggering an energy storage system emergency stop button M in an energy storage system control module 2 that fails or needs to be maintained in the energy storage system, or an energy storage system emergency shutdown trigger unit 21 of any energy storage system control module 2 after the 1^{st} energy storage system control module 2, while remaining energy storage units 201 continue to work, thereby ensuring that when an individual energy storage unit 201 needs to be maintained or shut down in an emergency and a station needs to output power externally at the same time, relatively flexible shutdown control is achieved for the emergency shutdown of an energy storage system.

In some embodiments of this application, as shown in FIG. 1, the energy storage system control unit 23 includes a BMS control cabinet 231 and a system control board 232, where the BMS control cabinet 231 and the system control board 232 may be hardware control boards with different signal processing functions. These hardware control boards are integrated to form an energy storage system control unit 23. The energy storage system control unit 23 is also combined with some other hardware circuits, switches, relays, etc., and is disposed in the energy storage system control module 2 to process and control a signal.

Specifically, each energy storage system control unit 23 includes a plurality of BMS control cabinets 231. The plurality of BMS control cabinets 231 are connected in parallel. The system control board 232 is communicatively connected to the BMS control cabinets 231. The system control board 232 is communicatively connected to a control board in each BMS control cabinet 231 for communication control. The control board in each BMS control cabinet 231 feeds back a status of the BMS control cabinet 231 to the system control board 232 in real time. The system control board 232 is configured to send a stop power output signal to the BMS control cabinet 231 in response to the energy storage system emergency shutdown control signal. The BMS control cabinet 231 is controlled by the system control board 232. The BMS control cabinet 231 is connected to the energy storage unit 201, and is configured to control the energy storage unit 201 to stop output in response to the stop power output signal.

Specifically, the BMS control cabinet 231 performs linkage control on a device such as an auxiliary power supply, a system circuit breaker, and a relay. After receiving the stop power output signal, the BMS control cabinet 231 controls to turn off a device such as a contactor, so as to control the energy storage unit 201 to stop output.

In some embodiments of this application, as shown in FIG. 1 and with reference to FIG. 3, the relay switch B includes a first switch K1 and a second switch K2. The first switch K1 and the second switch K2 serve as normally open contacts of the intermediate relay 22 and always remain in an OFF state under a normal working state.

The first switch K1 is connected to the system control board 232, and is configured to send the energy storage system emergency shutdown control signal in response to the trigger signal of the energy storage system emergency shutdown trigger unit 21.

It may be seen from the above content that after the energy storage system emergency shutdown trigger unit 21 is triggered, the power supply line of the relay coil A in the intermediate relay 22 is turned off, and a status of the first switch K1 in the relay switch B changes from OFF to ON. That is, the energy storage system emergency shutdown control signal is sent. At this time, the energy storage system emergency shutdown control signal sent after the first switch K1 is turned on may trigger the system control board 232 to send the stop power output signal, so that the BMS control cabinet 231 controls the energy storage unit 201 to stop output.

The second switch K2 is connected to the BMS control cabinet 231. Specifically, the BMS control cabinet 231 is connected in series with the second switch K2. The second switch K2 is configured to send the energy storage system emergency shutdown control signal in response to the trigger signal of the energy storage system emergency shutdown trigger unit 21. The BMS control cabinet 231 is configured to control the energy storage unit 201 to stop output in response to the energy storage system emergency shutdown control signal. It may be seen from the above content that after the energy storage system emergency shutdown trigger unit 21 is triggered, the power supply line of the relay coil A in the intermediate relay 22 is turned off, and a status of the second switch K2 in the relay switch B also changes from OFF to ON. That is, the energy storage system emergency shutdown control signal is sent. The BMS control cabinet 231 is further configured to control the energy storage unit 201 to stop output in response to the energy storage system emergency shutdown control signal. That is, the energy storage system emergency shutdown control signal sent after the second switch K2 is turned on can also directly trigger the BMS control cabinet 231 to control the energy storage unit 201 to stop output.

Based on the above, when the first switch K1 is turned on, the BMS control cabinet 231 may be controlled by the system control board 232, thereby controlling a working state of the energy storage unit 201. After the second switch K2 is turned on, the BMS control cabinet 231 may also directly control the working state of the energy storage unit 201. It may be seen that two control circuits, that is, the system control board 232 and the BMS control cabinet 231, may serve as redundant control to ultimately achieve control of the working state of the energy storage unit 201. Based on this, the second switch K2 is disposed to be directly connected to the BMS control cabinet 231, so that a circuit where the second switch K2 is located may serve as a redundant circuit for a circuit where an original system control board 232 is located. In this way, when the system control board 232 fails or the BMS control cabinet 231 cannot respond to the stop power output signal sent by the system control board 232, the BMS control cabinet 231 can also respond to the energy storage system emergency shutdown control signal sent when the second switch K2 is turned on, so as to control the energy storage unit 201 to stop output.

In some embodiments of this application, as shown in FIG. 1, the energy storage system emergency shutdown control system 10 further includes a USP power supply 3.

In some embodiments, the USP power supply 3 selects an uninterruptible power supply of 24V. A first end 's' of the USP power supply 3 is connected to the first end h of the station system emergency shutdown trigger module 1 and the first end e of the system distribution power supply, and a second end t of the USP power supply 3 is connected to the second end f of the system distribution power supply and a second end b of each relay coil.

In other embodiments, as shown in FIG. 1, the energy storage system emergency shutdown control system 10 further includes a station system distribution control cabinet 4. The station system emergency shutdown trigger module 1 and the USP power supply 3 are both disposed on the station system distribution control cabinet 4. Because the second ends b of the plurality of relay coils A are all connected to the second end f of the system distribution power supply in parallel, and the USP power supply 3 is connected to the system distribution power supply in parallel, as a backup power supply, the USP power supply 3 can replace the system distribution power supply to provide power supply of 24V to the energy storage system when an auxiliary power supply line of the 1^{st} energy storage unit 201 fails, thereby preventing affecting operation of the entire station.

It will be understood that in this application, a component or a power supply line is turned on, for example, the power supply line is turned on, the relay switch is turned on, the button is turned on, and the switch is turned on, which refers to a status in which current keeps flowing through a respective component or power supply line; and in this application, a component or a power supply line is turned off, for example, the power supply line is turned off, the relay switch is turned off, the button is turned off, and the switch is turned off, which refers to a status in which current does not flow through a respective component or power supply line.

In some embodiments of this application, FIG. 3 is a schematic block diagram of an energy storage system 20 according to an embodiment of this application. The energy storage system 20 includes a plurality of energy storage units 201 and an energy storage system emergency shutdown control system 10 according to any embodiment described above. The energy storage system emergency shutdown control system 10 is connected to the plurality of energy storage units 201.

The energy storage system emergency shutdown control system 10 is configured to achieve emergency shutdown control on the energy storage system 20 when all or a part of the energy storage units 201 in the energy storage system 20 fail. A specific control manner may be understood based on content in the above embodiments, which will not be described in detail here.

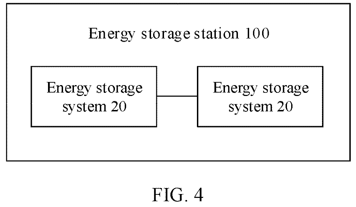

In some embodiments of this application, FIG. 4 is a schematic block diagram of an energy storage station 100 according to an embodiment of this application. The energy storage station 100 includes a plurality of energy storage systems 20. It may be understood that two energy storage systems 20 are shown in FIG. 4, but this application is not limited thereto.

In the energy storage station 100 according to an embodiment of this application, the energy storage system emergency shutdown control system 10 according to the above embodiment is used to perform emergency shutdown control on the energy storage system 20, so that when an energy storage unit 201 fails or needs to be shut down for maintenance and a station needs to output power, the energy storage system emergency shutdown control system 10 controls a part of the energy storage units 201 in the energy storage system 20 to be shut down, while remaining energy storage units 201 continue to work, thereby ensuring that when an individual energy storage unit 201 needs to be maintained or shut down in an emergency and a station needs to output power externally at the same time, relatively flexible shutdown control is achieved for the emergency shutdown of an energy storage system 20.

Other structures and operations of the energy storage station 100 and the energy storage system 20 according to an embodiment of this application are known to those skilled in the art, which will not be described in detail here.

The terms "first" and "second" are used for descriptive purposes only and should not be construed as indicating or implying the relative importance or implicitly indicating a number of the indicated technical features. Thus, features defined with "first" or "second" may explicitly or implicitly include one or more of such features. In the description of this application, unless otherwise specified, "a plurality of" means two or more.

In the description of this specification, the descriptions referring to the terms "one embodiment", "some embodiments", "exemplary embodiments", "an example", "a specific example", or "some examples" and the like mean that the specific features, structures, materials, or characteristics described in conjunction with the embodiment or example are included in at least one embodiment or example of this application. In this specification, the illustrative expressions of the above terms do not necessarily refer to the same embodiment or example.

Although the embodiments of this application have been shown and described, those skilled in the art will appreciate that various changes, modifications, substitutions, and variations may be made to the embodiments without departing from the principle and spirit of this application. The scope of this application is defined by the claims and their equivalents.

## Claims

1. An energy storage system emergency shutdown control system (10), comprising:
N energy storage system control modules (2), wherein each energy storage system control module (2) comprises an energy storage system emergency shutdown trigger unit (21), an intermediate relay (22), and an energy storage system control unit (23), the intermediate relay (22) comprises a relay coil (A) and a relay switch (B), a first end (a) of the relay coil (A) is connected to a first end (c) of the energy storage system emergency shutdown trigger unit (21), a second end (b) of the relay coil (A) is connected to a second end (f) of a system distribution power supply, the relay switch (B) is connected to the energy storage system control unit (23), the intermediate relay (22) is configured to generate an energy storage system emergency shutdown control signal in response to a trigger signal of the energy storage system emergency shutdown trigger unit (21) and to send the energy storage system emergency shutdown control signal to the connected energy storage system control unit (23), and the energy storage system control unit (23) is configured to control an energy storage unit (201) to stop output in response to the energy storage system emergency shutdown control signal, wherein N is a positive integer greater than 1; and
a first end (c) of an energy storage system emergency shutdown trigger unit (21) of an n^{th} energy storage system control module (2) is connected to a second end (d) of an energy storage system emergency shutdown trigger unit (21) of an (n+1)^{th} energy storage system control module (2), and n<N.

2. The energy storage system emergency shutdown control system (10) according to claim 1, wherein the energy storage system control unit (23) comprises:
a system control board (232), wherein the system control board (232) is configured to send a stop power output signal in response to the energy storage system emergency shutdown control signal; and
a BMS control cabinet (231), wherein the BMS control cabinet (231) is connected to the system control board (232) and the energy storage unit (201), and is configured to control the energy storage unit (201) to stop output in response to the stop power output signal.

3. The energy storage system emergency shutdown control system (10) according to claim 2, wherein the relay switch (B) comprises:
a first switch (K1), wherein the first switch (K1) is connected to the system control board (232), and is configured to send the energy storage system emergency shutdown control signal in response to the trigger signal of the energy storage system emergency shutdown trigger unit (21).

4. The energy storage system emergency shutdown control system (10) according to any one of claims 1 to 3, wherein the energy storage system control unit (23) comprises:
a BMS control cabinet (231); and
a second switch (K2), wherein the second switch (K2) is connected to the BMS control cabinet (231), and is configured to send the energy storage system emergency shutdown control signal in response to the trigger signal of the energy storage system emergency shutdown trigger unit (21), and the BMS control cabinet (231) is configured to control the energy storage unit (201) to stop output in response to the energy storage system emergency shutdown control signal.

5. The energy storage system emergency shutdown control system (10) according to any one of claims 1 to 4, wherein each energy storage system control unit (23) comprises a plurality of BMS control cabinets (231), and the plurality of BMS control cabinets (231) are connected in parallel.

6. The energy storage system emergency shutdown control system (10) according to any one of claims 1 to 5, wherein the energy storage system emergency shutdown control system (10) further comprises:
a USP power supply (3), wherein a first end (s) of the USP power supply (3) is connected to a first end (e) of the system distribution power supply, and a second end (t) of the USP power supply (3) is connected to the second end (f) of the system distribution power supply and a second end (b) of each relay coil (A).

7. The energy storage system emergency shutdown control system (10) according to claim 6, wherein the energy storage system emergency shutdown control system (10) further comprises:
a station system emergency shutdown trigger module (1), wherein a first end (h) of the station system emergency shutdown trigger module (1) is connected to the first end (s) of the USP power supply (3) and the first end (e) of the system distribution power supply, a second end (i) of the station system emergency shutdown trigger module (1) is connected to a second end (d) of an energy storage system emergency shutdown trigger unit (21) of a 1^{st} energy storage system control module (2), and the station system emergency shutdown trigger module (1) is configured to cut off power supply in response to a station system emergency shutdown trigger signal.

8. The energy storage system emergency shutdown control system (10) according to claim 7, wherein the energy storage system emergency shutdown control system (10) further comprises a station system distribution control cabinet (4), and the USP power supply (3) and the station system emergency shutdown trigger module (1) are both disposed on the station system distribution control cabinet (4).

9. The energy storage system emergency shutdown control system (10) according to any one of claims 1 to 8, wherein each energy storage system control module (2) comprises a distribution box (24), and the energy storage system emergency shutdown trigger unit (21), the intermediate relay (22), and the energy storage system control unit (23) are all disposed on the distribution box (24).

10. An energy storage system (20), comprising:
a plurality of energy storage units (201); and
an energy storage system emergency shutdown control system (10) according to any one of claims 1 to 9, wherein the energy storage system emergency shutdown control system (10) is connected to the plurality of energy storage units (20).

11. An energy storage station (100), comprising:
a plurality of energy storage systems (20) according to claim 10.
